Europäisches Patentamt

European Patent Office

Office européen des brevets

(19)

(11) Veröffentlichungsnummer : **0 134 531**
**B1**

(12) **EUROPÄISCHE PATENTSCHRIFT**

(45) Veröffentlichungstag der Patentschrift :
04.03.87

(51) Int. Cl.⁴ : **B 62 D 55/205**

(21) Anmeldenummer : **84109008.7**

(22) Anmeldetag : **30.07.84**

(54) Gleiskettenverbindungsglied.

(30) Priorität : 05.08.83 DE 3328334

(43) Veröffentlichungstag der Anmeldung :
20.03.85 Patentblatt 85/12

(45) Bekanntmachung des Hinweises auf die Patenterteilung : 04.03.87 Patentblatt 87/10

(84) Benannte Vertragsstaaten :
AT BE CH DE FR GB IT LI LU NL SE

(56) Entgegenhaltungen :
DE-A- 2 114 734
DE-C-  290 551
DE-C-  721 473
DE-C- 1 755 630
DE-U- 6 604 785
FR-A- 1 146 444
US-A- 2 566 678

(73) Patentinhaber : Hoesch Aktiengesellschaft
Eberhardstrasse 12
D-4600 Dortmund 1 (DE)

(72) Erfinder : Creutz, Walter
Winkelstrasse 26
D-4600 Dortmund 18 (DE)
Erfinder : Steinborn, Wilhelm
Dorfmühlenstrasse 7
D-5630 Remscheid (DE)
Erfinder : Henke, Claus, Dr.-Ing.
Schoofsweg 16
D-4600 Dortmund (DE)

(74) Vertreter : Happe, Otto, Dipl.-Ing.
Isselburger Strasse 12
D-5000 Köln 60 (DE)

## Beschreibung

Die Erfindung betrifft ein Gleiskettenverbindungsglied, insbesondere einen Klemmverbinder, der einen die beiden Kettenbolzenlageraugen verbindenden, sich über die gesamte Breite des Verbindungsgliedes erstreckenden Schlitz aufweist, der entgegen der Federwirkung des Verbindungsgliedes durch eine Klemmschraube zusammenpreßbar ist und der an seiner Umfangsfläche mindestens eine Härtezone aufweist (siehe DE-C-1 755 630).

Die Klemmverbinder der vorgenannten Art dienen nicht nur dazu, die Bolzen einer Gleiskette an den Außenkanten zu verbinden ; sie übernehmen darüber hinaus die Kraftübertragung zwischen Laufwerksantrieb und Gleiskette. Das wird dadurch erreicht, daß das Antriebsrad der Gleiskette seitlich als Zahnrad ausgebildet ist, in dessen Zahnlücken der Klemmverbinder eingreift, so daß der Klemmverbinder von den Zähnen des Antriebsrades mitgenommen wird. Dabei kommt ein bestimmter Bereich der Umfangsfläche des Klemmverbinders mit dem Zahngrund bzw. der Zahnflanke des Kettenrades in Berührung. Durch die sich hierbei ergebende Reibung entsteht in dem betreffenden Bereich der Umfangsfläche — dem Abwälzbereich — ein Verschleiß. Dieser Verschleiß ist dann besonders hoch, wenn sich während des Fahrbetriebes des Gleiskettenfahrzeugs auf dem Abwälzbereich des Klemmverbinders Abrieb und/oder Schmutz abgesetzt hat.

Es ist allgemein bekannt, Stellen hohen Verschleißes zu härten. So können beispielsweise die Einzelteile eines Kettengliedes für Motorfahrzeuge an den hochbeanspruchten Stellen oberflächengehärtet sein (vgl. DE-C-721 473).

Es ist ferner bekannt, bei einem Gleiskettenverbindungsglied an dessen Umfangsfläche im Eingriffsbereich des Triebkranzes etwa kreisförmige Härtezonen vorzusehen (DE-PS-1 7 55 630).

Während bei der Anwendung der erstgenannten Lösung ein Klemmverbinder der eingangs genannten Art unelastisch und daher unbrauchbar würde, schützt die letztgenannte Lösung nur sehr eng begrenzte Stellen des Abwälzbereiches, was lediglich zu einer Minderung des Verschleißes an diesen Stellen führt. Die nicht gehärteten Stellen des Abwälzbereiches unterliegen weiterhin einem erheblichen Verschleiß.

Der Erfindung liegt die Aufgabe zugrunde, die vorgenannten Nachteile der bekannten Kettenglieder zu vermeiden und den Klemmverbinder der eingangs genannten Art derart auszubilden, daß er bei ausreichender Elastizität im gesamten Abwälzbereich seiner Umfangsfläche gegen Verschleiß geschützt ist. Diese Aufgabe wird durch die im Anspruch 1 angegebene Erfindung gelöst.

Der erfindungsgemäße Klemmverbinder weist eine sehr hohe Standzeit auf, so daß eine längere Laufzeit der Gleiskette mit längeren Wartungsintervallen erzielt wird. Ein weiterer Vorteil des erfindungsgemäßen Klemmverbinders besteht darin, daß dessen Wandstärke im Bereich der Härtezone dünner ausgeführt werden kann, wodurch eine Gewichtsverminderung des Klemmverbinders eintritt. Diese Gewichtsverminderung hat eine besonders günstige Wirkung auf das Fahrverhalten von schnellaufenden Kettenfahrzeugen.

Vorteilhafte Weiterbildungen der Erfindung sind in den Unteransprüchen beschrieben.

Bei Ausgestaltung der Erfindung nach Anspruch 5 ist sichergestellt, daß die Gewindegänge der Gewindebohrung für die Klemmschraube nicht gehärtet werden.

Die Erfindung ist anhand der Zeichnung näher erläutert. Es zeigen :

Figur 1 einen Abschnitt einer über ein Kettenrad geführten, mit Klemmverbindern versehenen Gleiskette ;

Figur 2 einen einzelnen Klemmverbinder in Seitenansicht ;

Figur 3 den Klemmverbinder gemäß Fig. 2, von unten gesehen ;

Figur 4 einen Schnitt nach der Linie IV-IV durch den Klemmverbinder gemäß Fig. 2 ;

Figur 5 einen Schnitt nach der Linie V-V durch den Klemmverbinder gemäß Fig. 2.

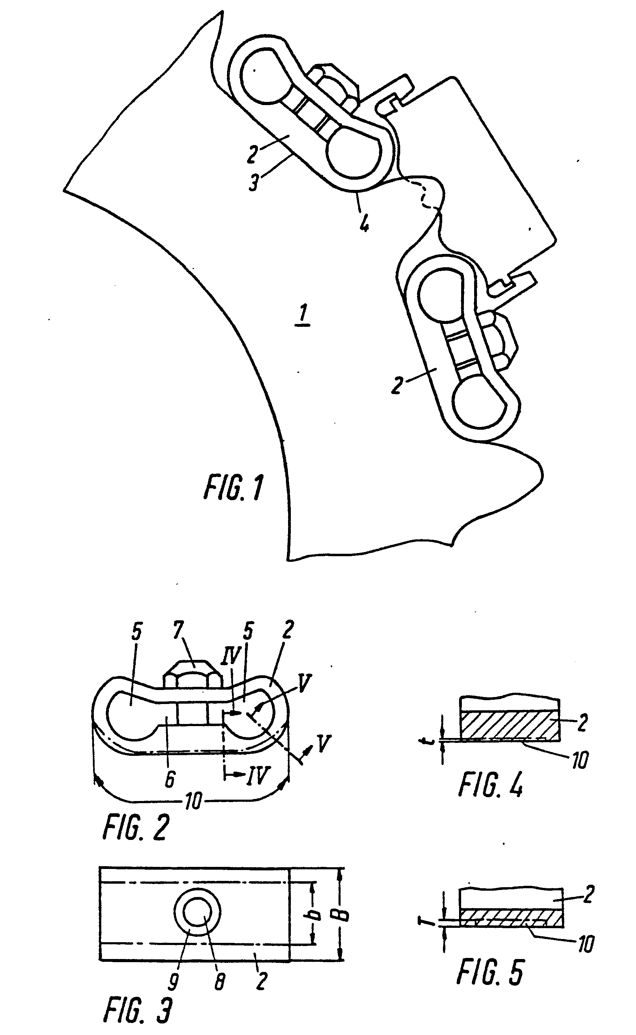

Aus Fig. 1 ist zu ersehen, daß an dem an einem Umlenkende der Gleiskette vorgesehenen Kettenrad 1 die Klemmverbinder 2 mit einem Teil ihrer Umfangsfläche anliegen. Dieser Teil der Umfangsfläche, der sich über den Zahngrund 3 und den unteren Bereich der Zahnflanke 4 erstreckt, ist besonders hohen Verschleiß ausgesetzt.

Der in den Fig. 2 bis 5 dargestellte Klemmverbinder 2 weist zwei Kettenbolzenlageraugen 5 auf, die durch einen sich über die gesamten Breite B (vgl. Fig. 3) des Klemmverbinders 2 erstreckenden Schlitz 6 verbunden sind. Der Klemmverbinder 2 ist durch eine Klemmschraube 7 zusammenpreßbar. Die in dem Klemmverbinder 2 vorgesehene Gewindebohrung 8 für die Klemmschraube 7 ist an ihrem unteren Ende mit einer Ansenkung 9 versehen. Der Klemmverbinder 2 weist im Abwälzbereich seiner Umfangsfläche eine Härtezone 10 auf, deren Breite b (vgl. Fig. 3) kleiner ist als die Breite B des Klemmverbinders 2. Wie aus den Fig. 4 und 5 zu ersehen ist, weist die Härtezone 10 in demjenigen Bereich, der mit dem Zahngrund 3 (vgl. Fig. 1) in Berührung kommt, eine geringere Tiefe $t$ auf als die Tiefe $T$ in demjenigen Bereich, der mit der Zahnflanke 4 (vgl. Fig. 1) in Berührung kommt.

## Patentansprüche

1. Gleiskettenverbindungsglied, insbesondere Klemmverbinder, der einen die beiden Kettenbolzenlageraugen (5) verbindenden, sich über die gesamte Breite (B) des Verbindungsgliedes erstreckenden Schlitz (6) aufweist, der entgegen der Federwirkung des Verbindungsgliedes

durch eine Klemmschraube (7) zusammenpreßbar ist und der an seiner Umfangsfläche mindestens eine Härtezone (10) aufweist, dadurch gekennzeichnet, daß sich die Härtezone (10) ohne Unterbrechung mindestens über den gesamten, mit dem Zahngrund (3) bzw. der Zahnflanke (4) des Kettenrades (1) in Berührung kommenden Abwälzbereich der Umfangsfläche erstreckt, in einer Breite (b) die geringer ist als die Breite (B) des Klemmverbinders (2) und die mindestens der Hälfte der Breite (B) des Klemmverbinders (2) entspricht.

2. Gleiskettenverbindungsglied nach Anspruch 1, dadurch gekennzeichnet, daß die Breite (b) der Härtezone mindestens zwei Drittel der Breite (B) des Klemmverbinders (2) entspricht.

3. Gleiskettenverbindungsglied nach Anspruch 1 oder 2, dadurch gekennzeichnet, daß die Tiefe (t) desjenigen Bereichs der Härtezone, der mit dem Zahngrund (3) in Berührung kommt, etwa 30 % bis 70 % der Tiefe (T) desjenigen Bereichs der Härtezone beträgt, der mit der Zahnflanke (4) in Berührung kommt.

4. Gleiskettenverbindungsglied nach Anspruch 3, dadurch gekennzeichnet, daß die Tiefe (t) desjenigen Bereichs der Härtezone, der mit dem Zahngrund (3) in Berührung kommt, etwa 40 % bis 60 % der Tiefe (T) desjenigen Bereichs der Härtezone beträgt, der mit der Zahnflanke (4) in Berührung kommt.

5. Gleiskettenverbindungsglied nach einem der Ansprüche 1 bis 4, dadurch gekennzeichnet, daß die Gewindebohrung (8) für die Klemmschraube (7) an ihrem unteren Ende mit einer Ansenkung (9) versehen ist, deren Tiefe mindestens der Tiefe der Härtezone entspricht.

## Claims

1. A caterpillar track connecting member, particularly a compression coupling, which includes a slot (6) connecting the two link pin bearing eyes (5) and extending over the entire width (B) of the connecting member, which slot is compressible under the action of a set screw (7) against the spring action of the connecting member, and which includes at least one hard zone (10) in its peripheral surface, characterised in that the hard zone (10) extends continuously over at least the whole rolling region of the peripheral surface which comes into contact with the tooth base (3) or the tooth flank (4) of the chain wheel (1) and has a width (b) which is smaller than the width (B) of the compression coupling (2) and corresponds to at least half the width (B) of the compression coupling (2).

2. A caterpillar track connecting member according to claim 1, characterised in that the width (b) of the hard zone corresponds to at least two thirds of the width (B) of the compression coupling (2).

3. A caterpillar track connecting member according to claim 1 or 2, characterised in that the depth (t) of that region of the hard zone which contacts the tooth base (3) amounts to about 30 % to 70 % of the depth (T) of that region of the hard zone which contacts the tooth flanks (4).

4. A caterpillar track connecting member according to claim 3, characterised in that the depth (t) of that region of the hard zone which comes into contact with the tooth base (3) amounts to about 40 % to 60 % of the depth (T) of that region of the hard zone which contacts the tooth flanks (4).

5. A caterpillar track connecting member according to any of claims 1 to 4, characterised in that the tapped bore (8) for the set screw (7) is provided with a countersink (9) at its lower end, the depth of which is at least equal to the depth of the hard zone.

## Revendications

1. Organe d'assemblage de chenilles, en particulier organe d'assemblage par serrage, comportant une fente (6) reliant les deux œillets de montage (5) des boulons de chenille et s'étendant sur toute la largeur (B) de l'organe d'assemblage, pouvant être pressé par une vis de serrage (7) à l'encontre de l'effet de ressort de l'organe d'assemblage, et comportant au moins une zone de dureté (10) sur sa surface périphérique, caractérisé en ce que la zone de dureté (10) s'étend, sans interruption, au moins sur toute la zone de roulement de la surface périphérique qui entre en contact avec le fond des dents (3) ou le flanc des dents (4) de la roue à chaîne (1) et ce, en une largeur (b) qui est inférieure à la largeur (B) de l'organe d'assemblage par serrage (2) et qui correspond au moins à la moitié de la largeur (B) de cet organe d'assemblage par serrage (2).

2. Organe d'assemblage de chenilles selon la revendication 1, caractérisé en ce que la largeur (b) de la zone de dureté correspond au moins aux deux tiers de la largeur (B) de l'organe d'assemblage par serrage (2).

3. Organe d'assemblage de chenilles selon la revendication 1 ou 2, caractérisé en ce que la profondeur (t) de la partie de la zone de dureté qui entre en contact avec le fond des dents (3), représente environ 30 % à 70 % de la profondeur (T) de la partie de la zone de dureté qui entre en contact avec le flanc des dents (4).

4. Organe d'assemblage de chenilles selon la revendication 3, caractérisé en ce que la profondeur (t) de la partie de la zone de dureté qui entre en contact avec le fond des dents (3), représente environ 40 % à 60 % de la profondeur (T) de la partie de la zone de dureté qui entre en contact avec le flanc des dents (4).

5. Organe d'assemblage de chenilles selon une des revendications 1 à 4, caractérisé en ce que le trou fileté (8) prévu pour la vis de serrage (7) comporte, à son extrémité inférieure, un chanfrein (9) dont la profondeur correspond au moins à la profondeur de la zone de dureté.

FIG. 1

FIG. 2

FIG. 3

FIG. 4

FIG. 5